# EUROPÄISCHE PATENTSCHRIFT

(11) **EP 3 079 533 B1**
(45) Veröffentlichungstag und Bekanntmachung des Hinweises auf die Patenterteilung: **29.03.2017**
(21) Anmeldenummer: 15795171.6
(22) Anmeldetag: 17.11.2015
(51) Int. Cl.: A47J 31/36, A47J 31/44

(54) **BRÜHMODUL, KAPSELERKENNUNGSMODUL UND GETRÄNKEZUBEREITUNGSMASCHINE**
BREWING MODULE, CAPSULE SENSING MODULE AND MACHINE FOR PREPARING BEVERAGES
MODULE D'INFUSION, MODULE DE DÉTECTION DE CAPSULE ET MACHINE DE PRÉPARATION DE BOISSONS

(30) Priorität: 01.12.2014 EP 14195680
(43) Veröffentlichungstag der Anmeldung: 19.10.2016
(73) Patentinhaber: Qbo Coffee GmbH, 8304 Wallisellen (CH)
(72) Erfinder: RUBIN, Andres, CH-8608 Bubikon (CH); ZWICKER, Dominic, CH-9650 Nesslau (CH); TANNER, Pascal, CH-8716 Schmerikon (CH)
(74) Vertreter: Frei Patent Attorneys
(86) Internationale Anmeldenummer: PCT/EP2015/076849
(87) Internationale Veröffentlichungsnummer: WO 2016/087192

(56) Entgegenhaltungen:
- EP-B1- 1 786 303
- WO-A1-2012/123440

## Beschreibung

Die Erfindung betrifft Extraktionsgeräte zum Zubereiten von Getränken oder dergleichen aus einem in einer Kapsel enthaltenen Extraktionsgut, beispielsweise gemahlenem Kaffee. Sie betrifft insbesondere ein Brühmodul für ein Extraktionsgerät, ein Kapselerkennungsmodul sowie eine Getränkezubereitungsmaschine mit einem solchen Brühmodul und/oder Kapselerkennungsmodul.

Extraktionsgeräte zum Zubereiten von Getränken oder dergleichen aus einem in einer Portionsverpackung vorhandenen Extraktionsgut sind beispielsweise als Kaffee- oder Espressomaschinen bekannt. In vielen entsprechenden Systemen sind die Portionsverpackungen als Kapseln ausgebildet, in denen das Extraktionsgut bspw. luftdicht abgeschlossen ist. Für die Extraktion wird die Kapsel angestochen, beispielsweise an zwei einander gegenüberliegenden Seiten. Auf der ersten Seite wird dann eine Extraktionsflüssigkeit - im Allgemeinen heisses Wasser - eingeleitet. Auf der zweiten Seite wird das Extraktionsprodukt aus der Kapsel ausgeleitet. Dies geschieht in einem sogenannten Brühmodul. Ein solches weist eine Brühkammer auf, in der die Kapsel aufgenommen wird. Besonders beliebt sind Brühmodule, bei welchen die Kapsel eingeworfen und die Brühkammer manuell mittels eines Bedienhebels oder automatisch motorisiert verschlossen wird, wobei beim erneuten Öffnen der Brühkammer nach dem Brühvorgang die Kapsel selbsttätig aus der Brühkammer entfernt und in einen Kapselbehälter ausgeworfen wird. Solche Brühmodule mit selbsttätigem Kapselauswurf sind im Allgemeinen als horizontale Brühmodule ausgebildet, d.h. der Kapseleinwurf erfolgt von oben, das Verschliessen der Brühkammer ist eine horizontale Relativbewegung zweier Brühkammerteile, die Brühflüssigkeit fliesst im wesentlichen horizontal, und der Kapselbehälter ist unterhalb der Brühkammer ausgebildet.

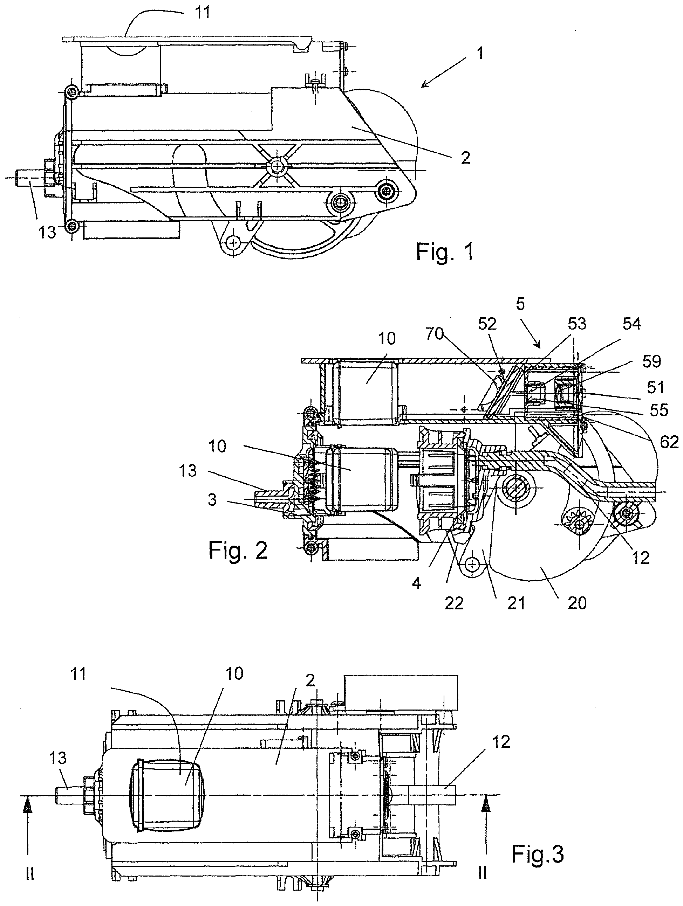

Die EP-B-1 786 303 offenbart ein Kapselerkennungsmodul für ein Brühmodul zum Zubereiten eines Brühgetränks aus einer Portionenkapsel, aufweisend einen optischen Sensor zum Erfassen von optischen Eigenschaften der Kapsel, welche sich an einer Kapselerkennungsposition befindet (siehe Fig. 1).

Ein Problemfeld in diesem Zusammenhang betrifft das Erfassen von Kapseleigenschaften, beispielsweise das Auslesen von auf der Kapsel angebrachten Informationen zum Auslösen eines Brühprozesses abhängig von diesen Informationen. Eine Möglichkeit dafür besteht darin, die Kapsel mit einer geeigneten Markierung oder Farbkombination zu versehen und diese optisch zu erfassen. Dies geschieht beispielsweise mit einer Kamera. Allerdings ergeben sich praktische Probleme bei einem solchen in unmittelbarer Nähe der Brühkammer durchgeführten Prozess. Aufgrund der von der Brühkammer abgegebenen Wärme, von Wasserdampf und von Verschmutzungen ist es einerseits wünschenswert, eine Kamera möglichst entfernt von der Brühkammer und von dieser abgeschirmt anzubringen. Andererseits können entsprechende Abschirmungen - beispielsweise in der Form von Fenstern - den Ausleseprozess selbst erschweren, insbesondere wenn sie beschlagen oder verschmutzen. Die üblichen Massnahmen gegen ein solches Beschlagen oder Verschmutzen sind Beschichtungen, die jedoch in einer Brühkammer-Umgebung nur beschränkt wirksam sind.

Es ist Aufgabe der Erfindung, eine Getränkezubereitungsmaschine zur Verfügung zu stellen, welche Nachteile des Standes der Technik überwindet und welche durch eine möglichst einfache Konstruktion die Erfassung von Eigenschaften einer verwendeten Portionskapsel vor dem Brühprozess ermöglicht.

Gemäss der Erfindung wird ein Kapselerkennungsmodul für ein Brühmodul zum Zubereiten eines Brühgetränks aus einer Portionenkapsel zur Verfügung gestellt, welches aufweist:
- einen optischen Sensor, insbesondere eine Kamera, zum Erfassen von optischen Eigenschaften der Kapsel, welche sich an einer Kapselerkennungsposition befindet,
- ein Kapselerkennungsfenster aus einem transparenten Material zwischen der Kapselerkennungsposition und der Kamera, und
- einen Lüfter zum Erzeugen eines Luftstroms auf der Seite des Kapselerkennungsfensters zur Kapselerkennungsposition hin.

Dies beruht auf der Erkenntnis, dass auch bei einer Trennung von Brühkammer einerseits und Kapselerkennungsposition andererseits die Verlässlichkeit der Kapselerkennung durch ein Beschlagen des Kapselerkennungsfensters beeinträchtigt werden kann. Insbesondere nach einem erfolgten Brühprozess und nach Öffnen der Brühkammer ist fast unvermeidlich, dass heisse Dämpfe nach oben steigen und das Kapselerkennungsfenster beschlagen. Durch den Lüfter wird einem solchen Beschlagen effizient vorgebeugt. Es hat sich gezeigt, dass durch diese an sich einfache Massnahme die Verlässlichkeit der Kapselerkennung markant verbessert werden kann.

Der Umstand, dass das Fenster aus einem "transparenten" Material ist, bedeutet nicht, dass es vollständig durchlässig für den ganzen sichtbaren Teil des elektromagnetischen Spektrums sein muss. Vielmehr wird lediglich eine Transparenz für einen Teil des elektromagnetischen Spektrums verlangt, in welchem der optische Sensor empfindlich ist für welchen die Kapsel ein optisch auslesbares Merkmal aufweist. In Frage kommen dabei insbesondere Licht im sichtbaren Wellenlängenbereich oder Infrarotlicht.

Als "Lüfter" wird hier ein aktiver Lüfter verstanden, d.h. ein Lüfter, bei welchem Luft durch aktiven Energieeintrag bewegt wird, insbesondere ein elektrisch angetriebener Lüfter. Der Lüfter kann insbesondere als Ventilator ausgebildet sein, welcher Luft zwischen dem Bereich vor dem Kapselerkennungsfenster und einer Umgebung der Getränkezubereitungsmaschine transportiert.

Der Lüfter kann gezielt ansteuerbar sein, wobei die Ansteuerung des Lüfters bspw. so erfolgt, dass der Lüfter nur während eines Kapselerkennungsvorgangs und/oder jeweils anschliessend an einen Brühprozess läuft; auch ein Dauerbetrieb im betriebsbereiten Zustand der Getränkezubereitungsmaschine ist möglich.

Mit dem Kapselerkennungsmodul kann - das ist an sich bekannt - insbesondere erstens bestimmt werden, ob die eingelegte Kapsel überhaupt für eine Verwendung in der Getränkezubereitungsmaschine geeignet ist oder nicht. Zweitens besteht die Möglichkeit, aufgrund erkannter Kapseleigenschaften an den Benutzer entsprechende Informationen auszugeben, bspw. über ein Display. Es kann beispielsweise der Getränketyp (Kaffee, Tee, etc.), die Sorte (z.B. "100% Arabica"), die empfohlene Zubereitungsart (z.B. "Espresso", "Ristretto" oder "Lungo" etc.) und/oder eine andere Information angezeigt werden. Drittens kann auch das von der Kaffeemaschine für die Brühung verwendete Programm aufgrund der erkannten Kapselsorte gewählt werden, bspw. können der Brühdruck, die Brühdauer sowie eventuell auch die Temperatur und/oder andere Eigenschaften abhängig davon eingestellt werden, ob die eingelegte Kapsel für die Zubereitung von z.B. Ristretto, Espresso oder Lungo vorgesehen ist.

Geeignete optisch auslesbare Merkmale sind beispielsweise ein Strichcode, ein 2D-MatrixCode (bspw. QR-Code oder Aztec-Code), ein Piktogramm (Icon) und/oder auch eine bestimmte Farbgebung. Auch ein Code gemäss einer der europäischen Patentanmeldungen 14 197 487.3, 14 197 488.1 und/oder 14 197 489.9 kommt in Frage.

In Ausführungsformen ist das Kapselerkennungsfenster in einem nicht-rechten Winkel zu einer Achse zwischen der Kapselerkennungsposition und dem optischen Sensor angeordnet.

Als die Achse zwischen der Kapselerkennungsposition und dem optischen Sensor wird hier eine Achse im optischen Sinn verstanden, d.h. im Falle von Lichtumlenkungsmitteln zwischen Kapselerkennungsposition und Sensor entspricht die Achse nicht notwendigerweise einer direkten Verbindung sondern einem Strahlengang eines auf kürzestem Weg von der Mitte einer von der Kamera erfassten Fläche der Kapsel an der Kapselerkennungsposition zur Mitte des Sensors gelangenden Lichtstrahls. Wenn der optische Sensor eine Kamera mit einer Kameraoptik ist, kann die Achse mit einer optischen Achse (Symmetrieachse) der Kameraoptik zusammenfallen.

Der Winkel des Kapselerkennungsfensters zur Senkrechten auf die Achse am Ort ihres Durchtritts durch das Fenster beträgt beispielsweise in solchen Ausführungsformen mindestens 10°, insbesondere mindestens 15°.

Das Kapselerkennungsmodul weist ausserdem beispielsweise mindestens eine Lichtquelle zur Beleuchtung der Kapsel an der Kapselerkennungsposition auf. Eine solche Lichtquelle wird vorzugsweise hinter dem Kapselerkennungsfenster, d.h. der Seite des Kapselerkennungsfensters zum optischen Sensor hin angeordnet sein, um wie auch der optische Sensor durch das Kapselerkennungsfenster vor Dämpfen und Verschmutzungen geschützt zu sein.

Eine solche Lichtquelle kann bspw. eine LED oder eine Anzahl von LEDs umfassen.

Zwischen der Lichtquelle und der Kapselerkennungsposition, bspw. ebenfalls hinter dem Fenster, kann ein Lichtdiffusor vorhanden sein, um auffallige Reflexe auf der Kapsel zu verhindern, insbesondere in Fällen, in denen die Kapseloberfläche leicht spiegelnd wirkt.

Eine Lichtquelle und ein Diffusor können insbesondere in Bezug auf den optischen Sensor und eine eventuelle optische Achse peripher angeordnet sein; der Diffusor kann bspw. eine Kameraoptik umgeben.

Insbesondere in Kombination mit einer hinter dem Kapselerkennungsfenster angeordneten Lichtquelle hat das optionale Vorgehen mit einem Kapselerkennungsfenster in einem nicht-rechten Winkel zur Achse den Vorteil, dass Reflexionen der Lichtquelle am Fenster vom Ort des optischen Sensors her nicht sichtbar sind. Der optische Sensor kann daher, weil keine störenden Einflüsse von solchen Reflexen vorhanden sind, sehr empfindlich eingestellt sein.

Das Kapselerkennungsmodul kann Teil als eines Brühmoduls verwendbar sein.

Ein solches Brühmodul kann in Ausführungsformen zusätzlich folgende Elemente aufweisen:
- Ein Gehäuse, welches eine Kapseleinlegeöffnung aufweist, durch welche die Kapsel, beispielsweise in einer definierten Orientierung, eingelegt werden kann;
- ein erstes Brühmodulteil und ein relativ zu diesem bewegbares zweites Brühmodulteil, wobei durch das erste und zweite Brühmodulteil eine Brühkammer bildbar ist, welche die sich in einer Brühposition befindende Kapsel beim Brühvorgang mindestens teilweise umgibt, wobei das Brühmodul eingerichtet ist, durch das Einleiten einer Brühflüssigkeit in die Kapsel ein Brühgetränk zu brühen und dieses aus der Kapsel abzuleiten;
- wobei das erste und zweite Brühmodulteil relativ zueinander zwischen drei verschiedenen, definierten Positionen bewegbar sind,
- wobei in der ersten Position die Brühkammer gebildet wird,
- wobei nach einer Bewegung von der ersten in die zweite Position eine sich in der Brühkammer befindende Kapsel durch die Wirkung der Gravitation nach unten in einen Kapselbehälter fällt, wobei aber in der zweiten Position die Brühmodulteile bewirken, dass eine in durch die Kapseleinlegeöffnung eingelegte Kapsel vertikal oberhalb einer Höhe der Brühposition an der Kapselerkennuhgsposition aufgehalten wird,
- wobei in der dritten Position eine an der Kapselerkennungsposition befindliche Kapsel von dieser nach unten, im Wesentlichen bis auf die Höhe der Brühposition, fallen kann,
- und wobei die zweite Position zwischen der ersten Position und der dritten Position ist.

Die erste Position entspricht dabei dem geschlossenen Zustand der Brühkammer. In der zweiten Position ist die Brühkammer nach unten offen, aber nach oben für den Kapseleinwurf quasi geschlossen, und nur in der dritten Position ist sie nach oben und unten ganz offen.

Die Position, in welche bei diesen Ausführungsformen die Kapsel aus der Kapselerkennungsposition fällt, wenn die Brühmodulteile in der dritten Position sind, kann direkt die Brühposition sein. Es kann aber auch vorgesehen sein, dass die Kapsel in eine Zwischenposition, insbesondere auf vertikaler Höhe der Brühposition, fällt, und erst durch das Schliessen der Brühkammer, d.h. den Übergang der Brühmodulteile in die erste Position, in die Brühposition verschoben wird.

In diesen Ausführungsfonnen können die erste, zweite und dritte Position mechanisch, durch Anschläge und/oder als Rastpositionen oder dergleichen definiert sein. Der Umstand, dass die Brühmodulteile bewirken, dass eine durch die Kapseleinlegeöffnung eingelegte Kapsel vertikal oberhalb der Brühposition an einer Kapselerkennungsposition aufgehalten wird, kann bspw. durch eine Autlagepartie eines der Brühmodulteile - insbesondere des bewegten Brühmodulteils - bewirkt werden. Eine solche Auflagepartie kann einen Einwurfweg von der Kapselerkennungsposition nach unten so weit versperren, dass Kapsel nicht weiter nach unten fallen kann. Wenn - wie an sich bekannt - die Kapsel durch geeignete seitliche Führungsmittel in ihrer Orientierung geführt ist, kann das durch eine in der zweiten Position lediglich wenig in den Einwurfweg hinein ragende Partie des bewegten Brühmodulteils geschehen. Dadurch kann das Brühmodul insbesondere so ausgeführt sein, dass die Auflagepartie fest mit dem Rest des Brühmodulteils verbunden und bspw. sogar einstückig mit diesem ist und also ohne bewegliche Teile zwischen der Auflagepartie und den die Brühkammer mit-bildenden Partien des Brühmodulteils auskommt. In Ausführungsformen bildet ein oberseitig zum anderen Brühmodulteil hin ragendes Element des einen Brühmodulteils die Auflagepartie.

Die Bewegung der Brühmodulteile relativ zueinander ist insbesondere eine lineare Bewegung, d.h. eine Translation entlang einer Achse. Eine Verschwenkbarkeit der Brühmodulteile ist aufgrund des erfindungsgemässen Vorgehens nicht nötig, aber auch nicht ausgeschlossen.

Das Brühmodul ist insbesondere ein horizontales Brühmodul, und die Achse der Bewegung ist insbesondere eine im Wesentlichen horizontale Achse, d.h. sie verläuft parallel zur Oberfläche, auf der die Getränkezubereitungsmaschine abgestellt ist, oder ungefähr parallel dazu, bis zu bspw. maximal einem Winkel von 20°.

In Ausführungsformen ist der Antrieb für die Bewegung der Brühmodulteile relativ zueinander insbesondere ein elektrischer Antrieb. In diesen Ausführungsformen können gegebenenfalls, in den entsprechenden Ausführungsformen, die vorstehend definierte erste, zweite und/oder dritte Position, insbesondere die zweite Position, auch elektronisch definiert sein, indem der elektrische Antrieb so programmiert ist, dass er die Brühmodulteile jeweils um einen vorgegebenen Weg relativ zueinander bewegt. In solchen Ausführungsformen gehört die Ansteuerung des elektrischen Antriebs bspw. ebenfalls zum Brühmodul, auch wenn sie örtlich an einem anderen Ort der Getränkezubereitungsmaschine vorhanden und bspw. in die Ansteuerung der ganzen Maschine integriert ist. Die Ansteuerung des Antriebs kann insbesondere so programmiert sein, dass ein Bewegen in die dritte Position erst nach einem Kapselerkennungsvorgang erfolgt und dass nach erfolgtem Brühvorgang die Brühmodulteile immer aus der ersten in die zweite Position fahren, ausser es hat während des Brühvorgangs bereits ein Kapselerkennungsvorgang mit einer nächsten Kapsel stattgefunden.

In vielen Ausführungsformen wird eines der Brühmodulteile (nachfolgend "das ortsfeste Brühmodulteil", bspw. die Ausleitvorrichtung) gehäusefest montiert sein, während beim Übergang zwischen den Positionen das andere Brühmodulteil (nachfolgend "das bewegte Brühmodulteil", beispielsweise der Injektor) bewegt wird. Die relative Bewegung der Brühmodulteile zueinander wird dann also durch die Bewegung von lediglich dem bewegten Brühmodulteil bewirkt.

Die Erfindung betrifft auch ein Brühmodul mit einem erfindungsgemässen Kapselerkennungsmodul, beispielsweise mit den vorstehend beschriebenen zusätzlichen Eigenschaften, sowie eine Getränkezubereitungsmaschine mit einem solchen Kapselerkennungsmodul.

Nachfolgend werden Ausführungsbeispiele der Erfindung anhand von Figuren beschrieben. In den Figuren bezeichnen gleiche Bezugszeichen gleiche oder analoge Elemente. Es zeigen:
- Fig. 1: eine Seitenansicht eines Brühmoduls;
- Fig. 2: eine Schnittdarstellung des Brühmoduls von Fig. 1, entlang der Ebene II-II in Fig. 3 geschnitten;
- Fig. 3: eine Ansicht des Brühmoduls von Fig. 1 von oben;
- Fig. 4: eine Explosionsdarstellung von Elementen des Brühmoduls gemäss Fig. 1-3 (ohne einige der Gehäuseteile);
- Fig. 5-9: je eine Schnittdarstellung des Brühmoduls gemäss Fig. 1-3 während verschiedener Phasen des Betriebs;
- Fig. 10: ein Detail einer möglichen Ausführungsform einer Ausleitvorrichtung;
- Fig. 11: eine Explosionsdarstellung der oberseitig vorhandenen Elemente des Brühmoduls mit Kapselerkennungsmodul;
- Fig. 12: eine Explosionsdarstellung einer Kameraeinheit des Kapselerkennungsmoduls; und
- Fig. 13: ein Schema einer Getränkezubereitungsmaschine.

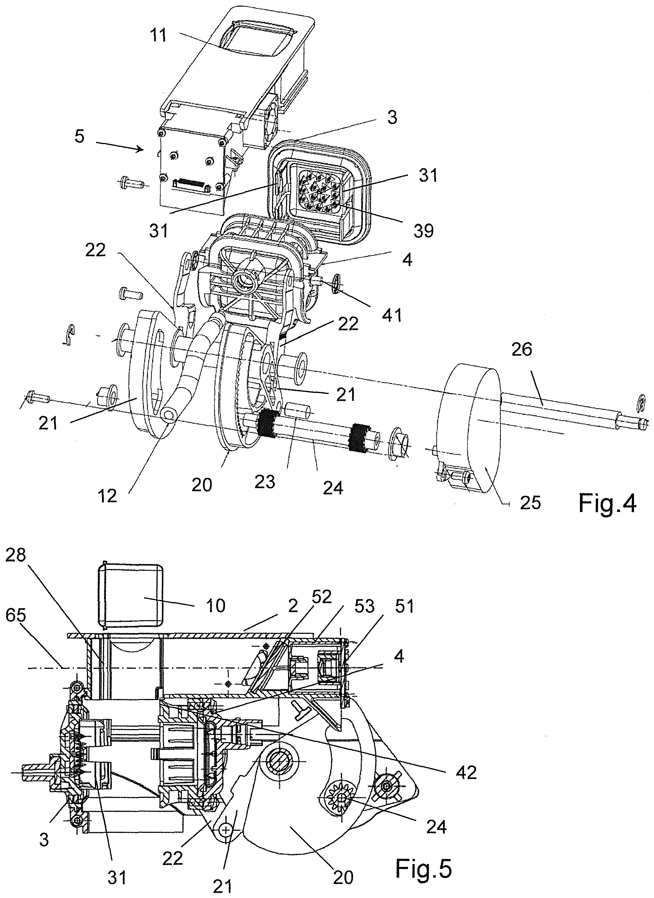

Das Brühmodul 1 gemäss **Figuren 1-3****,** dessen Elemente in **Figur 4** in einer Explosionsdarstellung zu sehen sind (wobei einige Elemente, insbesondere Gehäuseteile, ausgeblendet sind), weist ein äusseres Brühmodulgehäuse 2 auf. Dieses setzt sich im dargestellten Ausführungsbeispiel aus einem oberen Gehäuseteil (Kapselerkennungsgehäuse) und einem unteren Gehäuseteil (Brühkammereinheitsgehäuse) zusammen. Im Brühmodulgehäuse 2 sind zwei relativ zueinander bewegbare Brühmodulteile geführt, nämlich eine Ausleitvorrichtung 3 und ein Injektor 4.

Der Injektor 4 weist Perforationselemente zum Anstechen einer Kapsel 10 auf, die über eine Einlegeöffnung 11 in das Brühmodul einbringbar ist und mindestens teilweise mit einem Extraktionsgut - bspw. gemahlenem Kaffee - gefüllt ist. Der Injektor 4 ist eingerichtet, eine Flüssigkeit - bspw. heisses Wasser - durch die Perforationselemente oder an diesen vorbei in die angestochene Kapsel einzubringen wobei das Wasser über eine Wasserzuführung 12 zuführbar ist, die bspw. einen flexiblen Schlauch aufweisen kann.

Auch die Ausleitvorrichtung 3 weist im hier beschriebenen Ausführungsbeispiel Perforationselemente auf, nämlich extraktionsseitige Anstechspitzen 39. Diese können beispielsweise ausgebildet sein wie in WO 2015/039258 oder in WO 2010/118544 beschrieben oder eine andere Ausgestaltung aufweisen; auch die Verwendung von anderen Prinzipien als Anstechspitzen, bspw. mit gitterrostartigen Strukturen, sind möglich.

Ausserdem weist die Ausleitvorrichtung beidseits der Kapsel zur Injektorseite hin ragende Führungsmittel 31 auf, wie sie beispielsweise in WO 2015/048914 beschrieben sind, auf deren Inhalt hier betreffend die Funktionsweise dieser Führungsmittel sowie von entsprechenden Rückholmitteln des Injektors 4 ausdrücklich Bezug genommen wird.

Für die Zubereitung eines Brühgetränks wird wie an sich bekannt eine Kapsel zwischen der Ausleitvorrichtung 3 und dem Injektor 4 platziert, und diese werden so aufeinander zubewegt, dass zwischen diesen eine die Kapsel umfassende Brühkammer gebildet wird. Das heisse Wasser wird durch den Injektor unter Druck der Kapsel zugeführt, und das Extraktionsprodukt fliesst durch die Ausleitvorrichtung 3 via einen Getränkeauslauf 13 in ein bspw. darunter platziertes Trinkgefäss ab.

Die relative Bewegung der Brühmodulteile Ausleitvorrichtung und Injektor wird im hier beschriebenen Ausführungsbeispiel dadurch erreicht, dass die Ausleitvorrichtung 3 gehäusefest montiert ist, während der Injektor 4 entlang der horizontalen Achse bewegbar ist. Der Antrieb des Injektors erfolgt über einen motorisiert angetriebenen Kniehebel. Eine mit einem Elektromotor (in den Figuren nicht sichtbar, bspw. durch ein Antriebsgehäuse 25 abgedeckt) in Verbindung stehende Ritzelwelle 24 treibt eine verzahnte Antriebsscheibe 20 an, die drehfest mit einem ersten Kniehebelarm 21 verbunden ist, so dass eine Schwenkbewegung der Antriebsscheibe 20 um ihre Achse 26 den ersten Kniehebelarm 21 ebenfalls um diese Achse schwenkt. Ein zweiter Kniehebelarm 22 ist an einer Seite über einen Kniehebelbolzen 23 mit dem ersten Kniehebelarm 21 verbunden und wirkt an der anderen Seite mit einem Führungszapfen 41 des Injektors 4 zusammen. Da der Injektor durch das Gehäuse so gelagert ist, dass er nur linear entlang der im Wesentlichen horizontalen Achse verschiebbar ist, bewirkt eine Schwenkbewegung von Antriebsscheibe und erstem Kniehebelarm daher ein Strecken bzw. Knicken des vom Kniehebel gebildeten Kniegelenks und dadurch eine lineare Verschiebung des Injektors 4.

Oberhalb der Brühkammereinheit mit Ausleitvorrichtung 3 und Injektor 4 weist das Brühmodul ein Kapselerkennungsmodul 5 mit einer Kamera auf, dessen Aufbau und Funktionsweise nachstehend noch eingehender beschrieben wird.

Ein Betriebsablauf wird anhand von Figuren 5-9 beschrieben.

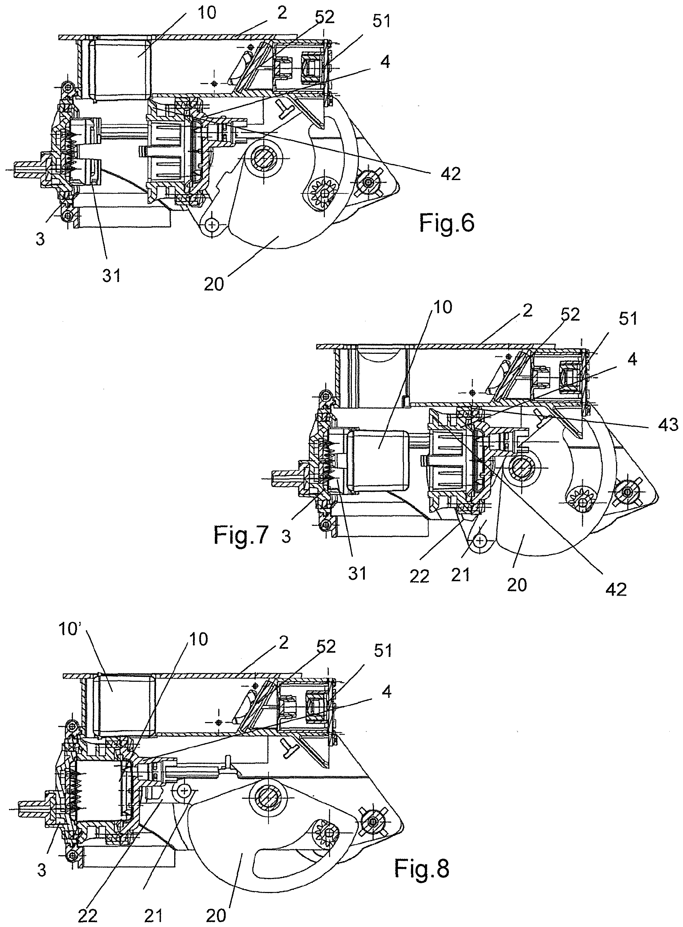

Beim Einlegen einer Kapsel 10 befindet sich der Injektor 4 beispielsweise an der zweiten Position, wie in **Figur 5** dargestellt. In dieser ist die Brühkammer zwar geöffnet, der Injektor ist aber nur so weit zur Injektionsseite zurückgefahren, dass eine Auflagepartie 42 des Injektors 4 die in der Einlegeöffnung 11 und durch eine seitliche Führung 28 geführte Kapsel 10 an der Kapselerkemungsposition zurückhält, was in **Figur 6** dargestellt ist.

Während sich die Kapsel 10 an dieser Kapselerkennungsposition gemäss Figur 6 befindet, wird die nachstehend noch beschriebene Kapselerkennung durchgeführt, wofür beispielsweise ein optisches Merkmal detektiert wird, welches an der zur Injektionsseite weisenden Seite der Kapsel (Kapselboden) angebracht ist.

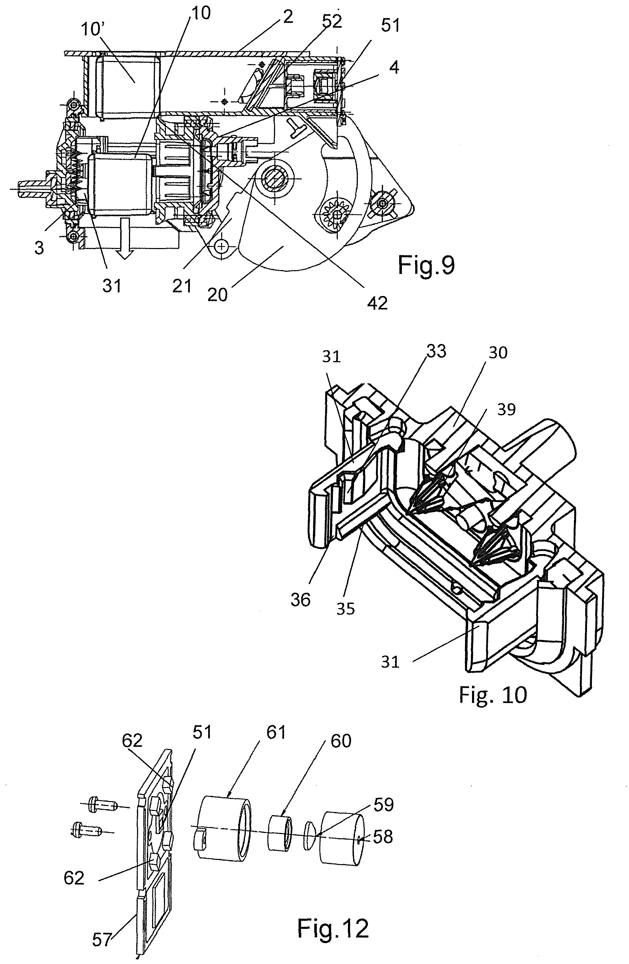

Gegebenenfalls abhängig von einem Resultat der Kapselerkennung wird anschliessend der Injektor 4 noch weiter zur Injektionsseite hin in die dritte Position gefahren, was in **Figur 7** illustriert ist. Dadurch wird die Auflagepartie von der Kapsel weg verschoben, und die Kapsel kann nach unten fallen. Auf Höhe der Brühposition wird sie durch eine Auflage der seitlichen Führungsmittel 31 gestoppt. Dies kann bspw. durch eine Auflage 35 geschehen, auf welcher ein Kragen und/oder eine andere Partie der Kapsel zu liegen kommt, wenn diese, mit dem Kragen in einer an die seitliche Führung 28 anschliessenden (ersten) Bahn 33 geführt, nach unten fällt. Dieses Prinzip ist in **Figur 10** illustriert und in WO 2015/048914 ausführlich beschrieben.

Nach Aktivierung durch den Benutzer oder selbsttätig wird anschliessend die Brühkammer geschlossen, wofür der Injektor von der dritten in die erste Position bewegt wird. Das Brühmodul mit dem Injektor 4 in der ersten Position zeigt **Figur 8****.** Die Kapsel 10 ist beidseitig angestochen, und der Brühprozess findet statt, indem heisses Wasser unter Druck in die Kapsel geleitet wird. Beispielsweise beim Verschliessen der Brühkammer wird auch der Kapselkragen aus der erwähnten ersten Bahn 33 verschoben.

Während des Brühprozesses kann optional bereits eine weitere Kapsel 10' eingelegt werden, die dann auf der bereits erwähnten Auflagepartie 42 oder einer weiteren Auflagepartie 43 aufliegt und in der Kapselerkennungsposition bleibt. Es kann also während des Brühprozesses der ersten Kapsel 10 bereits die Erkennung der zweiten Kapsel 10' erfolgen.

Nach Beendigung des Brühprozesses wird der Injektor zurück in die zweite Position bewegt. Die verbrauchte Kapsel 10 kann nach unten in einen Kapselbehälter fallen (**Figur 9**).

Der Umstand, dass die verbrauchte Kapsel nach unten fallen kann, kann bewirkt werden, indem die Kapselposition nach dem Brühprozess gegenüber der Position nach dem Einwurf so verschoben ist, dass sie nicht mehr auf der Auflage 35 aufliegt, sondern der Kragen beispielsweise in einer zweiten Bahn 36 geführt wird, wie ebenfalls in WO 2015/048914 beschrieben. Dabei besteht sowohl die Option, dass die zweite Bahn 36 im Vergleich zur ersten Bahn 33 weiter injektionsseitig verläuft als auch umgekehrt.

Alternativ zu diesem Vorgehen gemäss WO 2015/048914 kann beispielsweise auch vorgesehen sein, dass die seitlichen Führungsmittel nach Beendigung des Brühprozesses nach aussen verschwenkt sind, oder dass beim Schliessen der Brühkammer und/oder deren Öffnen nach dem Brühprozess anderswie Halte- oder Führungsmittel relativ zur Kapsel bewegt werden.

Anstelle einer Bewegung von der ersten in die zweite Position kann dann auch direkt eine Bewegung in die dritte Position erfolgen, wenn ein während des Brühvorgangs stattfindender Kapselerkennungsprozess einer zweiten Kapsel bereits abgeschlossen ist.

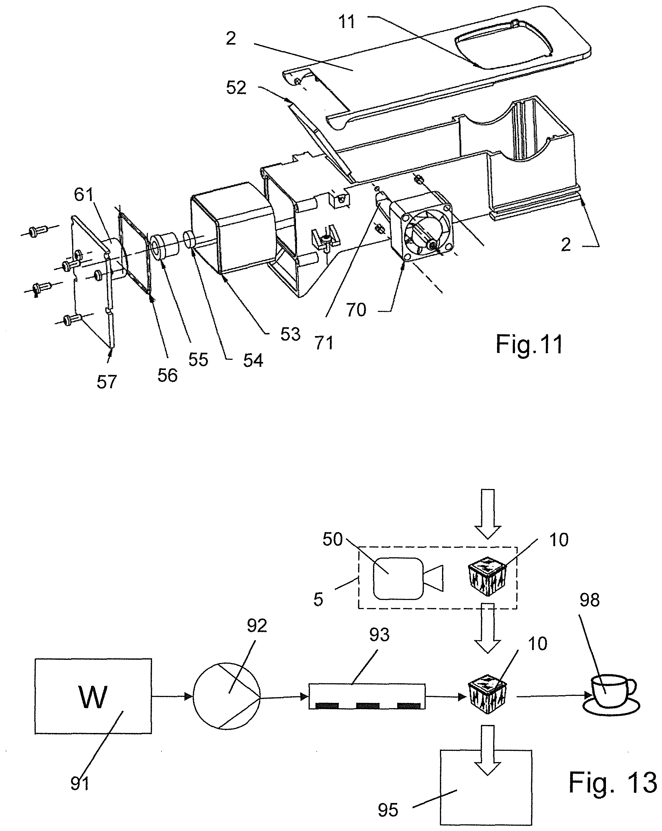

**Figur 11** zeigt das Kapselerkennungsmodul inklusive entsprechende Teile des Gehäuses 2 in einer Explosionsdarstellung. **Figur 12** zeigt Teile der Kamera sowie der Beleuchtungsmittel des Kapselerkennungsmoduls, ebenfalls in einer Explosionsdarstellung. Einige der entsprechenden Elemente sind auch in Fig. 5 sichtbar.

Nach einem Brühvorgang wird Wasserdampf auch in den Bereich oberhalb der Brühposition und in eine Umgebung der Kapselerkennungsposition gelangen. Das Kapselerkennungsmodul weist nebst der Kameraeinheit daher auch ein Kapselerkennungsfenster 52 auf, welches die Kamera und gegebenenfalls andere optische oder elektronische Bauteile vom Bereich trennt, in welchen der Wasserdampf gelangen kann.

Auf einer Platine 57 sind unter anderem mehrere LEDs 62 als Lichtquellen angeordnet, welche beim Kapselerkennungsvorgang Licht erzeugen, das via einen Diffusor 53 (vgl. auch Fig. 5) und ein Kapselerkennungsfenster 52 auf die Kapsel geworfen wird. An der Kapsel ist ein geeignetes optisch auslesbares Merkmal vorhanden, beispielsweise ein Strichcode, ein 2D-MatrixCode (bspw. QR-Code oder Aztec-Code), ein anderer definierter Code, ein Piktogramm (Icon) und/oder auch eine bestimmte Farbgebung.

Die durch die Lichtquellen beleuchtete Seite der Kapsel wird von der Kamera erfasst und in der Kamera oder durch ein separates, beispielsweise ebenfalls in der Kaffeemaschine vorhandenes Modul (nicht abgebildet) ausgewertet.

Das von der beleuchteten Kapsel zurückgeworfene Licht gelangt zu diesem Zweck durch das Kapselerkennungsfenster 52, und ein Diffusorfenster 54 im Diffusor 53 (die Diffusorwirkung besteht nur um das Diffusorfenster 54 herum, das Diffusorfenster 54 selbst ist transparent) zur Kamera, welche eine Blende 58, mindestens eine Linse 59 sowie den ebenfalls auf der Platine 57 vorhandenen Kamerasensor 51, bspw. mit einem CCD oder CMOS-Sensorarray aufweist.

Das Diffusorfenster 54 wird hier durch einen Diffusorfensterhalter 55 gehalten, und die Linse 59 ist in einer Linsenfixierung 60 geführt, welche ihrerseits durch einen auf der Platine 57 montierten Linsenhalter 61 gehalten wird. Die mechanischen Details der Kameraoptik und die Ausgestaltung des Diffusors können jedoch auch ohne Weiteres anders gewählt werden.

Zwischen dem Diffusor 53 und der Platine 57 ist noch ein optionaler Dichtungsrahmen 56 vorhanden, der zusammen mit dem Diffusor selbst für einen zusätzlichen Schutz der Kameraelektronik sorgt.

In Bezug auf die Kapselerkennungsposition vor dem Kapselerkennungsfenster 52 befindet sich ein Lüfter, der während des Kapselerkennungsvorgangs und/oder davor einen Luftstrom vor dem Kapselerkennungsfenster bewirkt, indem er Luft von ausserhalb der Kaffeemaschine ansaugt und durch einen Schlitz 71 im Gehäuse 2 vor das Kapselerkennungsfenster 52 bläst.

Ein weiteres Merkmal des Kapselerkennungsfensters ist bspw. in Fig. 11 ebenfalls dargestellt. Das Kapselerkennungsfenster 52 ist in einem nicht-rechten Winkel zur Achse 65 zwischen Kapselerkennungsposition und Kamerasensor 51 angeordnet. Dadurch wird effizient verhindert, dass Reflexionen der Lichtquellen die Abbildung der Kapsel auf dem Kamerasensor überlagern und die Auswertung verfälschen können. Der Winkel der Kapselerkennungsfensterebene zur Senkrechten auf die Achse 65 Kapselerkennungsposition-Kamerasensor (definiert als die jeweils durch die Mitte der Kamerasensorfläche bzw. der an der Kapselerkennungsposition befindlichen Kapsel gehend, siehe Fig. 5; die Achse 65 kann mit der optischen Achse der Kamera zusammenfallen) beträgt beispielsweise mindestens 10°, insbesondere mindestens 15°.

Eine erfindungsgemässe Maschine zum Zubereiten eines Brühgetränks aus einer Portionenkapsel, nämlich hier eine Kaffeemaschine, mit einem Brühmodul ist in **Figur 13** schematisch dargestellt. Es weist nebst dem Brühmodul einen Wassertank 91, eine Pumpe 92 zum Zuführen von Brühwasser zum Injektor 4 und eine Wasserheizungsvorrichtung 93 (bspw. Durchlauferhitzer) auf. Das Kapselerkennungsmodul 5 mit der Kamera 50 befindet sich insbesondere oberhalb der Brühkammer. Eine eingelegte Kapsel kann nach dem Kapselerkennungsprozess wie vorstehend beschrieben durch die Wirkung der Schwerkraft nach unten weitertransportiert werden. Unterhalb des Brühmoduls ist ausserdem ein Kapselbehälter 95 angeordnet, in welchen die Kapseln 1 nach dem Brühprozess fallen bzw. transportiert werden. Das Bezugszeichen 98 bezeichnet eine Kaffeetasse.

### Bezugszeichenliste:

- 1: Brühmodul
- 2: Gehäuse
- 3: Ausleitvorrichtung
- 4: Injektor
- 5: Kapselerkennungsmodul
- 10: Kapsel
- 10': zweite Kapsel
- 11: Einlegeöffnung
- 12: Wasserzuführung
- 13: Getränkeauslauf
- 20: Antriebsscheibe
- 21: Erster Kniehebelarm
- 22: zweiter Kniehebelarm
- 23: Kniehebelbolzen
- 24: Ritzelwelle
- 25: Antriebsgehäuse
- 26: Achse
- 28: Führung
- 31: Führungsmittel
- 33: erste Bahn
- 35: Auflage
- 36: zweite Bahn
- 39: extraktionsseitige Anstechspitzen
- 41: Führungszapfen
- 42: Auflagepartie
- 43: weitere Auflagepartie
- 50: Kamera
- 51: Kamerasensor
- 52: Kapselerkennungsfenster
- 53: Diffusor
- 54: Diffusorfenster
- 55: Diffusorfensterhalter
- 56: Dichtungsrahmen
- 57: Platine
- 58: Blende
- 59: Linse
- 60: Linsenfixierung
- 61: Linsenhalter
- 62: LED
- 65: Achse
- 70: Lüfter
- 71: Schlitz
- 91: Wassertank
- 92: Pumpe
- 93: Wasserheizungsvorrichtung
- 95: Kapselbehälter
- 98: Kaffeetasse

## Patentansprüche

1. Kapselerkennungsmodul für ein Brühmodul zum Zubereiten eines Brühgetränks aus einer Portionenkapsel (10), aufweisend:
• einen optischen Sensor, insbesondere eine Kamera (50), zum Erfassen von optischen Eigenschaften der Kapsel (10), welche sich an einer Kapselerkennungsposition befindet,
• ein Kapselerkennungsfenster (52) aus einem transparenten Material zwischen der Kapselerkennungsposition und der Kamera, und
• einen Lüfter (70) zum Erzeugen eines Luftstroms auf der Seite des Kapselerkennungsfensters zur Kapselerkennungsposition hin.

2. Kapselerkennungsmodul nach Anspruch 1, wobei das Kapselerkennungsfenster (52) in einem nicht-rechten Winkel zu einer Achse zwischen der Kapselerkennungsposition und dem optischen Sensor angeordnet ist.

3. Kapselerkennungsmodul nach Anspruch 1 oder 2, aufweisend mindestens eine Lichtquelle (62) zur Beleuchtung der Kapsel an der Kapselerkennungsposition, wobei die Lichtquelle auf der Seite des Kapselerkennungsfensters (52) zum optischen Sensor hin angeordnet ist.

4. Kapselerkennungsmodul nach Anspruch 3, aufweisend einen Diffusor (53) für von der Lichtquelle (62) erzeugtes Licht.

5. Brühmodul (1) zum Zubereiten eines Brühgetränks aus einer Portionenkapsel (10) aufweisend:
• Ein Gehäuse (2), welches eine Kapseleinlegeöffnung (11) aufweist, durch welche die Kapsel (10) eingelegt werden kann;
• ein erstes Brühmodulteil (3) und ein relativ zu diesem bewegbares zweites Brühmodulteil (4), wobei durch das erste und zweite Brühmodulteil eine Brühkammer bildbar ist, welche die sich in einer Brühposition befindende Kapsel beim Brühvorgang mindestens teilweise umgibt, wobei das Brühmodul eingerichtet ist, durch das Einleiten einer Brühflüssigkeit in die Kapsel ein Brühgetränk zu brühen und dieses aus der Kapsel abzuleiten; und
• ein Kapselerkennungsmodul nach einem der vorangehenden Ansprüche.

6. Brühmodul nach Anspruch 5, wobei das Kapselerkennungsmodul so angeordnet ist, dass die Kapselerkennungsposition vertikal oberhalb der Brühposition ist.

7. Brühmodul nach Anspruch 6,
• wobei das erste und zweite Brühmodulteil (3, 4) relativ zueinander zwischen drei verschiedenen, definierten Positionen bewegbar sind,
• wobei in der ersten Position die Brühkammer gebildet wird,
• wobei nach einer Bewegung von der ersten in die zweite Position die sich in der Brühkammer befindende Kapsel durch die Wirkung der Gravitation nach unten in einen Kapselbehälter (95) fallt, wobei aber in der zweiten Position die Brühmodulteile bewirken, dass eine in durch die Kapseleinlegeöffnung (11) eingelegte Kapsel vertikal oberhalb einer Höhe der Brühposition an der Kapselerkennungsposition aufgehalten wird,
• wobei in der dritten Position eine an der Kapselerkennungsposition befindliche Kapsel von dieser nach unten, im Wesentlichen bis auf die Höhe der Brühposition, fallen kann,
• und wobei die zweite Position zwischen der ersten Position und der dritten Position ist.

8. Brühmodul nach einem der Ansprüche 5-7, wobei die Bewegbarkeit des zweiten Brühmodulteils (4) relativ zum ersten Brühmodulteil (3) eine rein lineare relative Bewegung ermöglicht.

9. Getränkezubereitungsmaschine, insbesondere Kaffeemaschine, aufweisend eine Wasserzufuhr, eine Pumpe (92) und ein Wassererhitzungsmittel (93) sowie ein Kapselerkennungsmodul (5) nach einem der Ansprüche 1-4 und/oder ein Brühmodul nach einem der Ansprüche 5-8.

## Claims

1. A capsule recognition module for a brewing module for preparing a brewed beverage from a portion capsule (10), comprising:
• an optical sensor, in particular a camera (50), for detecting optical characteristics of the capsule (10) located at a capsule recognition position,
• a capsule recognition window (52) of a transparent material, between the capsule recognition position and the camera, and
• a fan (70) for producing an airflow, at the side of the capsule recognition window which is towards the capsule recognition position.

2. The capsule recognition module according to claim 1, wherein the capsule recognition window (52) is arranged at a non-right angle to an axis between the capsule recognition position and the optical sensor.

3. The capsule recognition module according to claim 1 or 2, comprising at least one light source (62) for the illumination of the capsule at the capsule recognition position, wherein the light source is arranged at the side of the capsule recognition window (52) which is towards the optical sensor.

4. The capsule recognition module according to claim 3, comprising a diffuser (53) for light produced by the light source (62).

5. A brewing module (1) for preparing a brewed beverage from a portion capsule (10), comprising:
• a housing (2) which comprises a capsule insert opening (11), through which the capsule (10) can be inserted;
• a first brewing module part (3) and a second brewing module part (4) which is movable relative to this, wherein a brewing chamber can be formed by the first and the second brewing module part, said brewing chamber at least partly surrounding the capsule located in a brewing position during the brewing procedure, wherein the brewing module is designed to brew a brewed beverage by way of the introduction of a brewing fluid into the capsule and to discharge this beverage out of the capsule; and
• a capsule recognition module according to any one of the preceding claims.

6. The brewing module according to claim 5, wherein the capsule recognition module is arranged such that the capsule recognition position is vertically above the brewing position.

7. The brewing module according to claim 6,
• wherein the first and the second brewing module part (3, 4) are movable relative to one another, between three different, defined positions,
• wherein the brewing chamber is formed in the first position,
• wherein the capsule located in the brewing chamber drops downwards into a capsule container (95) under the effect of gravity after a movement from the first into the second position, wherein however in the second position the brewing module parts have the effect that a capsule which is inserted through the capsule insert opening (11) is held vertically above a height of the brewing position, at the capsule recognition position,
• wherein in the third position, a capsule located at the capsule recognition position can drop downwards from this, essentially down to the height of the brewing position,
• and wherein the second position is between the first position and the third position.

8. The brewing module according to any one of the claims 5-7, wherein the movability of the second brewing module part (4) relative to the first brewing module part (3) permits a purely linear relative movement.

9. A beverage preparation machine, in particular coffee machine, comprising a water feed, a pump (92) and a water heating means (93), as well as a capsule recognition module (5) according to any one of the claims 1-4 and/or a brewing module according to any one of the claims 5-8.

## Revendications

1. Module de détection de capsule pour un module d'infusion destiné à préparer une boisson infusée à partir d'une capsule (10) à portion, le module présentant :
un détecteur optique, en particulier une caméra (50), qui saisit des propriétés optiques de la capsule (10) située en une position de détection de capsule,
une fenêtre (52) de détection de capsule en matériau transparent disposée entre la position de détection de capsule et la caméra et
un ventilateur (70) qui forme un écoulement d'air sur le côté de la fenêtre de détection de capsule tournée vers la position de détection de capsule.

2. Module de détection de capsule selon la revendication 1, dans lequel la fenêtre (52) de détection de capsule est disposée à un angle non droit par rapport à un axe qui relie la position de détection de capsule et le détecteur optique.

3. Module de détection de capsule selon les revendications 1 ou 2, présentant au moins une source de lumière (62) qui éclaire la capsule située en position de détection de capsule, la source de lumière étant disposée sur le côté de la fenêtre (52) de détection de capsule tournée vers le détecteur optique.

4. Module de détection de capsule selon la revendication 3, présentant un diffuseur (53) de la lumière émise par la source (62) de lumière.

5. Module d'infusion destiné à préparer une boisson infusée à partir d'une capsule (10) à portion, le module présentant :
un boîtier (2) qui présente une ouverture (11) d'insertion de capsule par laquelle la capsule (10) peut être insérée,
une première partie (3) de module d'infusion et une deuxième partie (4) de module d'infusion mobile par rapport à la première, une chambre d'infusion pouvant être formée par la première et la deuxième partie du module d'infusion, la chambre d'infusion entourant au moins en partie la capsule placé en position d'infusion pendant l'opération d'infusion, le module d'infusion étant conçu pour infuser une boisson infusée par introduction d'un liquide d'infusion dans la capsule et pour en guider la sortie hors de la capsule et
un module de détection de capsule selon l'une des revendications précédentes.

6. Module d'infusion selon la revendication 5, dans lequel le module de détection de capsule est disposé de telle sorte que la position de détection de capsule soit située verticalement au-dessus de la position d'infusion.

7. Module d'infusion selon la revendication 6, dans lequel la première et la deuxième partie (3, 4) du module d'infusion peuvent se déplacer l'une par rapport à l'autre entre trois positions différentes définies,
la chambre d'infusion étant formée dans la première position,
après déplacement depuis la première jusque dans la deuxième position, la capsule située dans la chambre d'infusion tombe vers le bas dans un récipient (95) à capsules sous l'effet de la gravité, mais dans la deuxième position, les parties du module d'infusion ont pour effet qu'une capsule insérée par l'ouverture (11) d'insertion de capsule est retenue en position de détection de capsule au-dessus du niveau de la position d'infusion,
dans la troisième position, une capsule située en position de détection de capsule peut tomber depuis cette dernière vers le bas, essentiellement jusqu'au niveau de la position d'infusion et
la deuxième position est une position située entre la première position et la troisième position.

8. Module d'infusion selon l'une des revendications 5 à 7, dans lequel la mobilité de la deuxième partie (4) du module d'infusion par rapport à la première partie (3) du module d'infusion permet un déplacement relatif purement linéaire.

9. Machine de préparation de boisson, en particulier machine à café, présentant une amenée d'eau, une pompe (92) et un moyen (93) de chauffage d'eau ainsi qu'un module (5) de détection de capsule selon l'une des revendications 1 à 4 et/ou un module d'infusion selon l'une des revendications 5 à 8.
